# EUROPÄISCHE PATENTSCHRIFT

(11) **EP 1 869 836 B1**
(45) Veröffentlichungstag und Bekanntmachung des Hinweises auf die Patenterteilung: **25.03.2009**
(21) Anmeldenummer: 06723950.9
(22) Anmeldetag: 01.04.2006
(51) Int. Cl.: H04L 12/437

(54) **MASTER-EINHEIT, KOMMUNIKATIONSSYSTEM UND VERFAHREN ZU DEREN BETREIBEN**
MASTER UNIT COMMUNICATION SYSTEM AND METHOD FOR OPERATION THEREOF
UNITE MAITRE, SYSTEME DE COMMUNICATION ET PROCEDE POUR LES FAIRE FONCTIONNER

(30) Priorität: 11.04.2005 DE 102005016596
(43) Veröffentlichungstag der Anmeldung: 26.12.2007
(73) Patentinhaber: Beckhoff Automation GmbH, 33415 Verl (DE)
(72) Erfinder: JANSSEN, Dirk, 33415 Verl (DE); KUCHARSKI, Franz-Josef, 33335 Gütersloh (DE)
(74) Vertreter: Patentanwaltskanzlei WILHELM & BECK
(86) Internationale Anmeldenummer: PCT/EP2006/002990
(87) Internationale Veröffentlichungsnummer: WO 2006/108527

(56) Entgegenhaltungen:
- EP-A- 0 587 898
- EP-A- 0 605 795
- EP-A- 0 973 301
- EP-A- 1 271 854
- DE-A1- 10 312 907
- DE-A1- 19 511 178
- DE-A1- 19 726 763
- GB-A- 2 348 782
- US-A- 4 527 270
- US-A1- 2004 008 719

## Beschreibung

Die Erfindung betrifft einen Teilnehmer und eine Master-Einheit in einem Kommunikationssystem mit mehreren Teilnehmern, die über eine gegenläufig arbeitende Doppelringstruktur miteinander verbunden sind, ein solches Kommunikationssystem mit einer Master-Slave-Struktur und ein Verfahren zum Betrieb des Teilnehmers bzw. des Kommunikationssystems.

In der Fertigungs- und Automatisierungstechnik werden zunehmend serielle Bussysteme eingesetzt, bei denen die dezentral angeordneten Geräte einer Maschinenperipherie wie E/A-Module, Messumformer, Antriebe, Ventile und Bedienerterminals über ein leistungsfähiges Echtzeit-Kommunikationssystem mit Automatisierungs-, Engineering- oder Visualisierungssystemen kommunizieren. Alle Teilnehmer sind dabei über einen seriellen Bus, vorzugsweise über einen Feldbus miteinander vernetzt, wobei der Datenaustausch über den Bus in der Regel auf der Grundlage des Master-Slave-Prinzips ausgeführt wird.

Die aktiven Busteilnehmer am Bussystem, in der Regel die Steuergeräte, sind im Besitz einer Buszugriffsberechtigung und bestimmen den Datentransfer auf dem Bus. Die aktiven Busteilnehmer werden als die Master-Einheiten im seriellen Bussystem bezeichnet. Passive Busteilnehmer sind dagegen in der Regel Maschinenperipheriegeräte. Sie erhalten keine Buszugriffsberechtigung, d.h. sie dürfen nur empfangene Informationssignale quittieren oder auf Anfrage einer Master-Einheit Informationssignale an diese übermitteln. Die passiven Busteilnehmer werden als Slave-Einheiten im seriellen Bussystem bezeichnet.

Feldbussysteme mit einer Master-Slave-Struktur werden im Allgemeinen, um eine aufwändige Verkabelung zu vermeiden, in Ringtopologie ausgeführt, wobei alle Busteilnehmer an einen ringförmigen Übertragungsweg angeschlossen sind. Ein von der Master-Einheit erzeugtes Informationssignal wird von der Master-Einheit in den ringförmigen Übertragungsweg eingespeist und durchläuft nacheinander die seriell an den ringförmigen Übertragungsweg angeschlossenen Slave-Einheiten, um dann wieder von der Master-Einheit empfangen und ausgewertet zu werden. Master-Slave-Systeme können dabei auch als Multi-Mastersysteme ausgelegt sein.

Die Informationssignale werden von der Master-Einheit in der Regel in Datenpakete organisiert, die sich aus Steuerdaten und Nutzdaten zusammensetzen, wobei vorzugsweise der Ethernet-Standard verwendet wird, der Datenpakete mit einer Länge von bis zu 1500 Byte bei einer gleichzeitig hohen Übertragungsgeschwindigkeit von 100 Mbit/sec ermöglicht. Jede der an den ringförmigen Übertragungsweg angeschlossenen Slave-Einheiten tauscht beim Durchlauf des von der Master-Einheit eingespeisten Ethernet-Telegramms auf dem ringförmigen Übertragungsweg die für ihn bestimmten Nutzdaten mit dem Ethernet-Telegramm aus.

Die Master-Slave-Kommunikationssysteme mit Ringstruktur sind in der Regel so aufgebaut, dass die Master-Einheit eine Sendeeinheit als Dateneinkoppelstelle und eine Empfangseinheit als Datenauskoppelstelle in ein Übertragungsmedium aufweist. Die einzelnen Slave-Einheiten sind dann am Übertragungsweg zu einer Kette zusammengeschlossen, wobei jeder Teilnehmer mit zwei Nachbarn, der erste und der letzte Teilnehmer in der Kette dabei mit der Master-Einheit verbunden ist. Die Übertragung der Datenpakete erfolgt dabei in eine Richtung ausgehend von der Master-Einheit über deren Sendeeinheit zur ersten angeschlossenen Slave-Einheit und von dort zur nächsten, bis die letzte Slave-Einheit in der Kette erreicht ist, und dann zurück zur Empfangseinheit der Master-Einheit. Jede Slave-Einheit weist zum Empfang der umlaufenden Datenpakete vom vorherigen Teilnehmer eine Schnittstelle mit einer Empfangseinheit und zur Weitergabe an den nachfolgenden Teilnehmer eine Schnittstelle mit einer Sendeeinheit auf, wobei zwischen Empfangs- und Sendeeinheit eine Verarbeitungseinheit angeordnet ist, um die durch die Slave-Einheit durchlaufenden Datenpakete zu verarbeiten, d.h. mit den Datenpaketen die der Slave-Einheit zugeordneten Nutzdaten auszutauschen.

Die ringförmigen Kommunikationssysteme mit Master-Slave-Struktur sind dabei oft so ausgelegt, dass die Master-Einheit mit den daran angeordneten Slave-Einheiten eine physikalische Linie bildet, wobei das Übertragungsmedium eine Doppelleitungsstruktur und jede Slave-Einheit zwei Ports mit einer kombinierten Sende-Empfangseinheit aufweist, wobei im Ausgangsport der letzten Slave-Einheit in der Übertragungskette Sende- und Empfangseinheit kurzgeschlossen sind. Die von der Master-Einheit über deren Empfangseinheit in die erste Leitung eingekoppelten Datenpakete werden von den Slave-Einheiten auf dem Hinweg bearbeitet und auf dem Rückweg über die zweite Leitung dann einfach nur an die Empfangseinheit der Master-Einheit weitergeleitet.

Eine zentrale Anforderung an Master-Slave-Kommunikationssysteme, insbesondere beim Einsatz in der Fertigungs- und Prozessautomatisierung, ist eine hohe Fehlertoleranz, also die Fähigkeit des Kommunikationssystems, trotz des Auftretens von Fehlern die geforderte Funktion, d.h. zum Beispiel die Herstellung eines Werkstücks aufrecht zu erhalten. Fehler im Kommunikationssystem, die ohne Beeinträchtigung des Prozesses überstanden werden müssen, sind dabei neben Fehlern in den Datenpaketen insbesondere auch der Ausfall ganzer Übertragungsstrecken, beispielsweise durch physikalisches Durchtrennen des Übertragungsmediums.

Um ein fehlertolerantes Master-Slave-Kommunikationssystem, insbesondere bei Streckenfehlern, d.h. beim Ausfall ganzer Übertragungsabschnitte, zu erreichen, werden oft gegenläufig arbeitende Doppelringstrukturen eingesetzt. So ist in der US 4,663,748 ein Kommunikationssystem mit einer Master-Slave-Struktur beschrieben, bei dem die Master-Einheit mit einer Mehrzahl von Slave-Einheiten seriell über zwei gegenläufig arbeitende Kommunikationspfade verbunden ist, wobei die Master-Einheit die Datenpakete gleichzeitig über beide Kommunikationspfade versendet. Die Slave-Einheit besitzt dann zwei Verarbeitungseinheiten, die jeweils zwischen die beiden Kommunikationspfade geschaltet sind, um die durchlaufenden Datentelegramme zu verarbeiten. Weiterhin sind in den Teilnehmern aktivierbare Kopplungseinheiten angeordnet, um bei Auftreten eines Streckenfehlers, z.B. dem Bruch einer Kommunikationsleitung, durch Signalüberwachung der Signale auf beiden Übertragungsringen und entsprechendes Umschalten das Kommunikationssystem so zu rekonfigurieren, dass ein durch den Streckenfehler bedingter Ausfall eines größeren Abschnitts des Kommunikationssystems oder sogar ein Gesamtausfall vermieden wird.

In der DE 103 12 907 A1 ist weiterhin vorgeschlagen, die Slave-Einheit so auszubilden, dass in jedem Kommunikationspfad in Datenübertragungsrichtung zuerst eine Verarbeitungseinheit und dann ein Multiplexer mit zwei Eingängen und einem Ausgang angeordnet ist. Der Multiplexer ist dabei mit seinen Eingängen jeweils mit den beiden Verarbeitungseinheiten der Slave-Einheit verbunden und mit seinem Ausgang an den zugeordneten Kommunikationspfad angeschlossen. Im störungsfreien Normalbetrieb schaltet jeder der beiden Multiplexer die im zugeordneten Kommunikationspfad angeordnete Verarbeitungseinheit durch. Im Störbetrieb, bei Auftreten eines Streckenfehlers im zugeordneten Kommunikationspfad, wird dann jedoch die Verarbeitungseinheit im anderen Kommunikationspfad durchgeschaltet. Diese Auslegung der Slave-Einheit ermöglicht es im Störfall im Wesentlichen in Echtzeit, das Kommunikationssystem zu rekonfigurieren.

Fehlertolerante Master-Slave-Kommunikationssysteme mit einer Doppelringstruktur, bei dem die einzelnen Slave-Einheiten jeweils zwei Verarbeitungseinheiten zur Verarbeitung der durchlaufenden Datentelegramme aufweisen, sorgen jedoch für einen hohen Hardware- und Schaltaufwand der Slave-Einheiten und erhöht somit die Kosten. Weiterhin muss jede Slave-Einheit im Normalbetrieb entscheiden, welches der beiden durch die zwei Verarbeitungseinheiten durchlaufenden Datenpakete zur Gerätesteuerung genutzt werden soll, was bei den geforderten hohen Datenübertragungsraten den Einsatz solcher Kommunikationssysteme stark beschränkt. Darüber hinaus ist es bei den bekannten fehlertoleranten Kommunikationssystemen mit Doppelringtopologie erforderlich, dass die Master-Einheit auf einen Streckenfehler gesondert reagiert und vom Normalbetrieb in einen Störbetriebmodus umschaltet.

Aus der US 2004/0008719 ist eine Master-Einheit für ein Master-Slave-Kommunikationssystem mit den Merkmalen des Anspruchs 1 und ein Verfahren zum Betreiben eines Master-Slave-Kommunikationssystems mit den Merkmalen des Oberbegriffs des Anspruchs 9 bekannt. Ein Kommunikationssystem mit einer fehlertoleranten Doppelringstruktur ist weiterhin in der US 4,527,270, der EP 0 605 795 A2 und der GB 2 348 782 sowie der EP 1 271 854 dargestellt.

Aufgabe der Erfindung ist es eine Master-Einheit für ein Master-Slave-Kommunikationssystem und ein Verfahren zur Betreibung eines Master-Slave-Kommunikationssystems bereitzustellen, die mit minimalen Hard- und Schaltaufwand in der Master-einheit Rekonfigurationsmaßnahmen in Echtzeit bei Auftreten von Streckenfehlern in einer fehlertoleranten Doppelringstopologie ermöglichen.

Diese Aufgabe wird durch eine Master-Einheit gemäß Anspruch 1 und ein Verfahren gemäß Anspruch 9 gelöst. Bevorzugte Weiterbildungen sind in den abhängigen Ansprüchen angegeben.

Erfindungsgemäß ist ein Teilnehmer in einem Kommunikationssystem mit mehreren Teilnehmern, die über einen ersten Kommunikationspfad und einen zweiten Kommunikationspfad miteinander verbunden sind, wobei die beiden Kommunikationspfade als Doppelringstruktur gegenläufig zueinander arbeiten, so ausgelegt, dass der Teilnehmer pro Kommunikationspfad je eine Empfangseinheit zum Empfangen von Informationssignalen auf dem zugehörigen Kommunikationspfad und je eine Sendeeinheit zum Senden von Informationssignalen auf dem zugehörigen Kommunikationspfad aufweist. Darüber hinaus ist eine einen Ein- und Ausgang aufweisende einzelne Verarbeitungseinheit zum Verarbeiten von durch den Teilnehmer durchlaufenden Informationssignalen sowie eine aktivierbare Kopplungseinheit vorgesehen. Diese aktivierbare Kopplungseinheit verbindet im Normalbetrieb die zum ersten Kommunikationspfad gehörende erste Empfangs- und Sendeeinheit, wobei die Verarbeitungseinheit zur Verarbeitung der durchlaufenden Informationssignale zwischengeschaltet ist, und die zum zweiten Kommunikationspfad gehörende zweite Empfangs- und Sendeeinheit miteinander. Im Fehlerfall der ersten Sendeeinheit und/oder der zweiten Empfangseinheit, d.h. beim Auftreten eines Streckenfehlers zum Teilnehmer, verbindet die aktivierbare Kopplungseinrichtung dann die erste Empfangseinheit mit der zweiten Sendeeinheit über die Verarbeitungseinheit und im Fehlerbetrieb der ersten Empfangseinheit und/oder der zweiten Sendeeinheit, d.h. wiederum beim Auftreten eines Streckenfehlers zum daran angrenzenden Teilnehmer, die zweite Empfangseinheit mit der ersten Sendeeinheit über die Verarbeitungseinheit.

Mit dieser Auslegung des Teilnehmers in einem fehlertoleranten Kommunikationssystem mit einer Doppelringtopologie kann bei Auftreten von Streckenfehlern zu benachbarten Teilnehmern in einem oder in beiden Kommunikationspfaden in Echtzeit eine Teilnehmer-Rekonfiguration vorgenommen werden, um trotz des Streckenfehlers einen störungsfreien Betrieb zu ermöglichen. Die Funktion des Teilnehmers und damit die Funktion des Kommunikationssystems, an das der Teilnehmer angeschlossen ist, kann so trotz des Streckenfehlers aufrecht erhalten werden. Die erfindungsgemäße Auslegung hat dabei den Vorteil, dass in jedem Teilnehmer nur eine einzelne Verarbeitungseinheit vorgesehen ist, was den Hardware-Aufwand und damit die Kosten reduziert. Darüber hinaus unterscheidet sich das Verhalten des Teilnehmers im Redundanzfall, also bei Auftreten eines Streckenfehlers, nicht vom Verhalten im Normalbetrieb, da die durchlaufenden Informationssignale immer von der einen vorhandenen Verarbeitungseinheit beim Durchlauf interpretiert und verarbeitet werden. Dies sorgt gleichzeitig für eine hohe Dynamik beim Umschaltvorgang und damit zum Einhalten der Echtzeitanforderungen an das Kommunikationssystem.

Bevorzugt ist es dabei, die aktivierbare Kopplungseinrichtung des Teilnehmers in Form eines ersten Multiplexers, dessen erster Eingang mit der ersten Empfangseinheit, dessen zweiter Eingang mit der zweiten Empfangseinheit, und dessen Ausgang mit der Verarbeitungseinheit verbunden ist, und eines zweiten Multiplexers, dessen erster Eingang mit der zweiten Empfangseinheit, dessen zweiter Eingang mit der Verarbeitungseinheit und dessen Ausgang mit der zweiten Sendeeinheit verbunden ist, auszulegen, wobei der erste Multiplexer im Normalbetrieb seinen ersten Eingang auf seinen Ausgang und im Fehlerbetrieb der ersten Empfangseinheit und/oder zweiten Sendeeinheit seinen zweiten Eingang auf seinen Ausgang aufschaltet, und wobei der zweite Multiplexer im Normalbetrieb seinen ersten Eingang auf seinen Ausgang und im Fehlerbetrieb der ersten Sendeeinheit und/oder der zweiten Empfangseinheit seinen zweiten Eingang auf seinen Ausgang aufschaltet.

Die erfindungsgemäße Auslegung der aktivierbaren Kopplungseinrichtung mit zwei 2-1-Multiplexern, die der Verarbeitungseinheit vor- bzw. nachgeschaltet sind, sorgt im Fehlerfall dafür, dass je nach Lage des auftretenden Streckenfehlers das Informationssignal immer so durch den Teilnehmer geleitet wird, dass das Informationssignal nach Durchlauf durch die Verarbeitungseinheit rückgekoppelt wird. Der Einsatz von 2-1-Multiplexern zieht nur einen geringen Hardware-Aufwand nach sich und ermöglicht darüber hinaus, einfach und hochdynamisch zwischen Normalbetrieb und Störbetrieb umzuschalten.

Erfindungsgemäß ist eine Master-Einheit in einem Kommunikationssystem mit einer Master-Slave-Struktur, das eine Mehrzahl von Teilnehmern als Slave-Einheiten aufweist, so ausgebildet, dass die Slave-Einheiten seriell mit der Master-Einheit über die aus dem ersten und dem zweiten Kommunikationspfad gebildete gegenläufig arbeitende Doppelringstruktur verbunden sind. Die Master-Struktur weist dabei für jeden Kommunikationspfad eine zugeordnete Sende- und Empfangseinheit auf, wobei die Sendeeinheiten mit einer Sendesteuereinheit und die Empfangseinheiten mit einer Empfangssteuereinheit verbunden sind. Die Sendesteuereinheit übergibt dabei an die beiden Sendeeinheiten der Master-Einheit ein Informationssignal mit einem Datenfeld und einem auf einen vorgegebenen Wert gesetzten Zählerfeld zum getrennten gegenläufigen Senden auf dem ersten und auf dem zweiten Kommunikationspfad. Die Verarbeitungseinheiten jedes Teilnehmers verändern beim Durchlauf des Informationssignals den Wert des Zählerfeldes um einen vorgegebenen Wert. Die Steuereinheit wertet dann den Wert der Zählerfelder der beiden von den Empfangseinheiten auf dem ersten und dem zweiten Kommunikationspfad empfangenen Informationssignale aus.

Mit der erfindungsgemäßen Auslegung des Kommunikationssystems besteht für die Master-Einheit auf einfache Weise die Möglichkeit, die Störungsfreiheit im Kommunikationssystem insbesondere auch bei einer Rekonfiguration des Kommunikationssystems nach Auftreten eines Streckenfehlers festzustellen. Nach Auswerten der Zählerfelder nach Empfang der beiden gegenläufig über die Kommunikationspfade umlaufenden identischen Informationssignale kann die Master-Einheit feststellen, wie viele der angeschlossenen Slave-Einheiten im Betrieb sind. Die Verarbeitungseinheiten der aktiven Slave-Einheiten verändern nämlich jeweils den Wert des Zählerfeldes des durchlaufenden Informationssignals mithilfe ihrer Verarbeitungseinheit, wodurch beim Auswerten der Zählerfelder der beiden in der Master-Einheit empfangenen Informationssignale dann auf die Funktionsfähigkeit der Slave-Einheiten geschlossen werden kann. Auch kann durch Korrelieren der Werte in den Zählerfeldern der beiden empfangenen Informationssignale festgestellt werden, zwischen welchen Teilnehmern der Streckenfehler im Kommunikationssystem aufgetreten ist, bzw. ob oder wo ein Teilnehmer komplett ausgefallen ist.

Bevorzugt erfolgt dabei die Auswertung der Zählerfelder der beiden auf dem ersten und zweiten Kommunikationspfad empfangenen umlaufenden Informationssignale durch Aufaddieren der Zählerfeldwerte. Der Gesamtwert gibt dann sofort an, ob alle angeschlossenen Slave-Einheiten aktiv sind, da deren Anzahl sich direkt im Summenwert wiederspiegelt.

Erfindungsgemäß wird die Fehlertoleranz des Kommunikationssystems auf einfache Weise weiterhin dadurch erhöht, dass im Lesebetrieb, d.h. dann, wenn die Slave-Einheiten Daten zur Master-Einheit übertragen sollen, von der Sendesteuereinheit der Master-Einheit an die beiden Sendeeinheiten ein Informationssignal mit einem Datenfeld übergeben wird, das für jeden angeschlossenen Teilnehmer am Kommunikationssystem einen zugeordneten Datenbereich aufweist. Diese beiden Informationssignale werden dann getrennt und gegenläufig auf dem ersten und dem zweiten Kommunikationspfad gesendet, wobei die Teilnehmer beim Durchlauf des Informationssignals in den zugeordneten Datenbereich einschreiben. Die Empfangssteuereinheit der Master-Einheit überlagert dann die Datenfelder der beiden auf dem ersten Kommunikationspfad und dem zweiten Kommunikationspfad empfangenen Informationssignale.

Mit dieser Vorgehensweise wird die Funktionsfähigkeit des Kommunikationssystems auf einfache Weise, insbesondere auch im redundanten Fall, also dann, wenn das Kommunikationssystem aufgrund eines Streckenfehlers rekonfiguriert ist und einzelne Teilnehmer auf Fehlerbetrieb umgeschaltet haben, ein zuverlässiger Lesebetrieb gewährleistet wird. Durch Überlagerung der Datenfelder der beiden empfangenen Informationssignale, d.h. insbesondere durch deren Verodern, wird dann nämlich ein kombiniertes Datenfeld erzeugt, in dem unbesehen davon, wie die Informationssignale über die Kommunikationspfade zur Master-Einheit rückgekoppelt werden, die alle von den Teilnehmern zu übermittelnden Daten enthalten sind. Die erfindungsgemäße Vorgehensweise ermöglicht so auf einfache Art eine hohe Fehlertoleranz, insbesondere bei Streckenfehlern in der Doppelringtopologie. Weiterhin unterscheidet sich das Auswerteverfahren der Master-Einheit im Rekonfigurationsbetrieb nicht von dem im Normalbetrieb.

Die Erfindung wird anhand der beigefügten Zeichnungen näher erläutert. Es zeigen:
Figur 1 eine schematische Darstellung eines erfindungsgemäßen Kommunikationssystems mit einer Master-Slave-Struktur, wobei
Figur 1A den Normalbetrieb,
Figur 1B eine erste Kommunikationssystem-Rekonfiguration bei Auftreten eines Strecken-Doppelfehlers, und
Figur 1C eine zweite Kommunikationssystem-Rekonfiguration bei Ausfall einer Slave-Einheit darstellt; und
Figur 2 eine schematische Darstellung eines Teilnehmers gemäß der Erfindung.

In der Automatisierungstechnik werden zunehmend Feldbussysteme eingesetzt, bei denen verteilt angeordnete Geräte der Maschinenperipherie mit Automatisierungs-, Engineerings- und Visualisierungssystemen über einen Feldbus kommunizieren. Das Feldbussystem weist in der Regel einen seriellen Bus auf, welcher beispielsweise eine elektrische Leitung, ein Lichtleiter oder ein Radiokabel sein kann. An diesen Feldbus sind dann alle Busteilnehmer angeschlossen, wobei zwischen aktiven und passiven Busteilnehmern unterschieden wird. Die aktiven Busteilnehmer am Feldbussystem sind die Master-Einheiten, die den Datenverkehr auf dem Bus bestimmen. Eine solche Master-Einheit ist zum Beispiel ein Industrie-PC, der als Prozessleitrechner in einem Fertigungsverfahren dient. Diese Master-Einheit besitzt eine Buszugriffsberechtigung und kann Daten ohne externe Aufforderung auf den Feldbus ausgeben. Die passiven Busteilnehmer am Bussystem sind Maschinenperipheriegeräte, beispielsweise E/A-Geräte, Ventile, Antriebe und Messumformer. Sie dienen als Slave-Einheiten und erhalten keine Buszugriffsberechtigung, d.h. sie dürfen nur empfangene Informationssignale quittieren oder auf Anfrage einer Master-Einheit Informationssignale an diese übermitteln.

Als Kommunikationsstandard zur Datenübertragung im Master-Slave-System wird vorzugsweise das Ethernet-Konzept eingesetzt. Bei Ethernet-Kommunikationssystemen werden die zu übermittelnden Daten in Datenpaketen, im weiteren auch als Telegramme bezeichnet, mit einem vorgegebenen Format verkapselt. Die Ethernet-Telegramme können dabei eine Datenlänge von bis zu 1500 Bytes aufweisen, wobei zusätzlich zu den Nutzdaten Steuerdaten, die eine Anfangskennung, eine Ziel-und Quelladresse, den Datenpaket-Typ und einen Fehlermechanismus aufweisen, enthalten sind.

Ethernet-Kommunikationssysteme mit einer Master-Slave-Struktur sind bevorzugt so ausgelegt, dass die einzelnen Slave-Einheiten über das Übertragungsmedium zu einer Kette zusammengeschlossen sind, wobei jede Slave-Einheit mit zwei Nachbarn, der erste und der letzte Teilnehmer in der Kette dabei mit der Master-Einheit verbunden ist, so dass sich eine Ringstruktur ergibt. Die Datenübertragung erfolgt dabei in eine Richtung ausgehend von der Master-Einheit zur ersten benachbarten Slave-Einheit und von dort zur nächsten bis zur letzten Slave-Einheit und dann zurück zur Master-Einheit.

Um eine hohe Fehlertoleranz insbesondere bei einem Streckenfehler im Kommunikationssystem, d.h. dem Ausfall ganzer Übertragungsabschnitte mit Slave-Einheiten, z.B. durch Kabelbruch, zu gewährleisten, weisen die Kommunikationssysteme mit einer Master-Slave-Struktur oft zwei Kommunikationspfade auf, die gegenläufig zueinander arbeiten. Durch die gegenläufig arbeitende Doppelringstruktur besteht bei Streckenfehlern die Möglichkeit, Rekonfigurationsmaßnahmen im Kommunikationssystem auszuführen, um die Funktionsfähigkeit des Kommunikationssystems trotz Streckenfehler aufrecht zu erhalten.

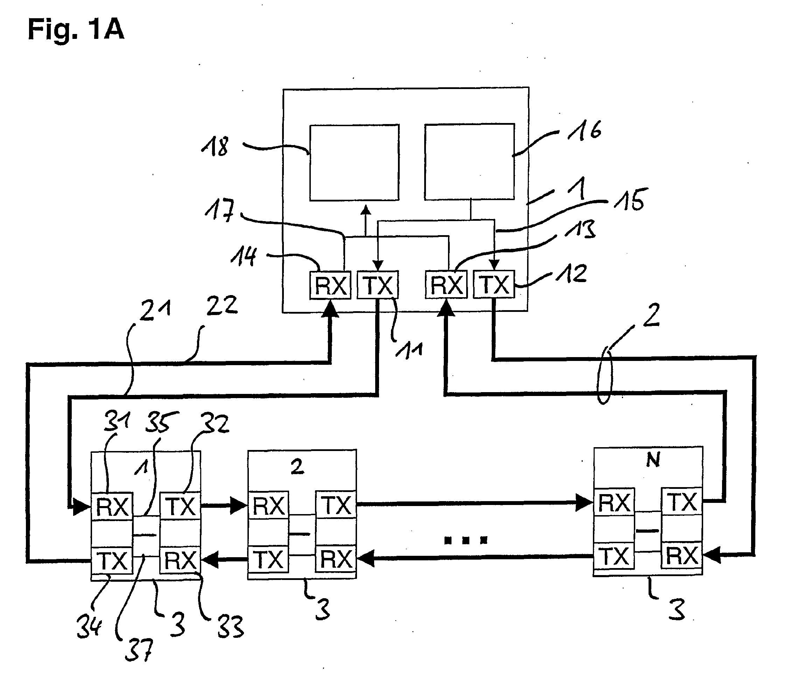

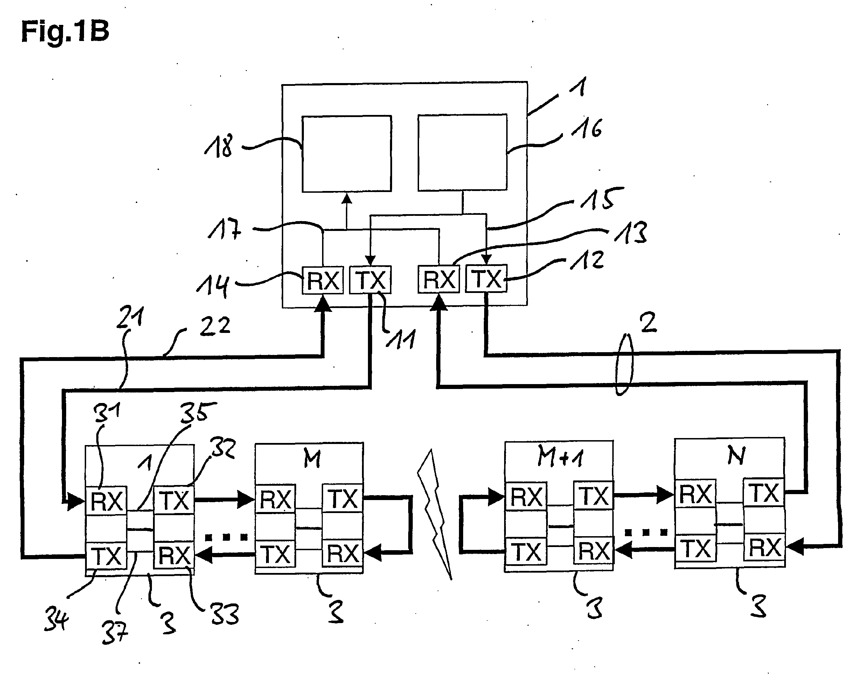

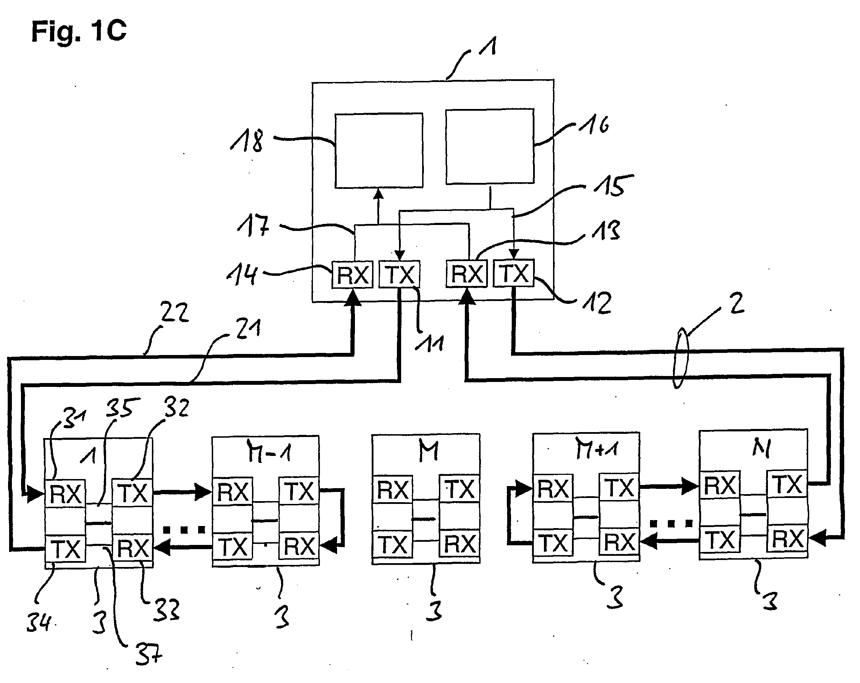

Figur 1 zeigt in einem Prinzipschaltbild ein solches fehlertolerantes Kommunikationssystem in einer erfindungsgemäßen Ausführungsform. Das Kommunikationssystem weist eine Master-Einheit 1 auf, die über eine Doppelringstruktur 2 mit N Slave-Einheiten 3 seriell verbunden ist. Die Doppelringstruktur umfasst zwei unidirektionale Kommunikationspfade 21, 22, die die angeschlossenen Slave-Einheiten 3 gegenläufig durchlaufen. Die Master-Einheit 1 ist über eine erste Sendeeinheit TX11 an den ersten Kommunikationspfad 21 als Datenauskoppelstelle und über eine zweite Sendeeinheit TX12 an den zweiten Kommunikationspfad 22 als Datenauskoppelstelle angeschlossen. Weiterhin weist die Master-Einheit 1 eine erste Empfangseinheit RX13 als Dateneinkoppelstelle für den ersten Kommunikationspfad 21 und eine zweite Empfangseinheit RX14 als Dateneinkoppelstelle für den zweiten Kommunikationspfad 22 auf. Die erste Sendeeinheit TX11 und die zweite Sendeeinheit TX12 sind über eine erste Steuerleitung 15 mit einer Sendesteuereinheit 16 verbunden. Die erste Empfangseinheit RX13 und die zweite Empfangseinheit RX14 sind über eine zweite Steuerleitung 17 und an eine Empfangssteuereinheit 18 angeschlossen.

Jede Slave-Einheit 3 wiederum weist zum Empfang von Telegrammen von einem vorherigen Teilnehmer über den ersten Kommunikationspfad 21 eine Schnittstelle mit einer ersten Empfangseinheit RX31 und zur Weitergabe an den nächsten Teilnehmer über den ersten Kommunikationspfad 21 eine Schnittstelle mit einer ersten Sendeeinheit TX32 auf. Weiterhin weist jede Slave-Einheit 3 zum Empfang eines umlaufenden Ethernet-Telegramms über den zweiten Kommunikationspfad 22 von einem vorherigen Teilnehmer eine Schnittstelle mit einer zweiten Empfangseinheit RX33 und zur Weitergabe an den nachfolgenden Teilnehmer eine Schnittstelle mit einer zweiten Sendeeinheit TX34 auf. Zwischen die erste Empfangseinheit RX31, die zweite Empfangseinheit RX32, die erste Sendeeinheit TX33 und die zweite Sendeeinheit TX34 ist in jeder Slave-Einheit 3 weiterhin eine Verarbeitungseinheit 35 und eine aktivierbare Kopplungseinrichtung 37 geschaltet.

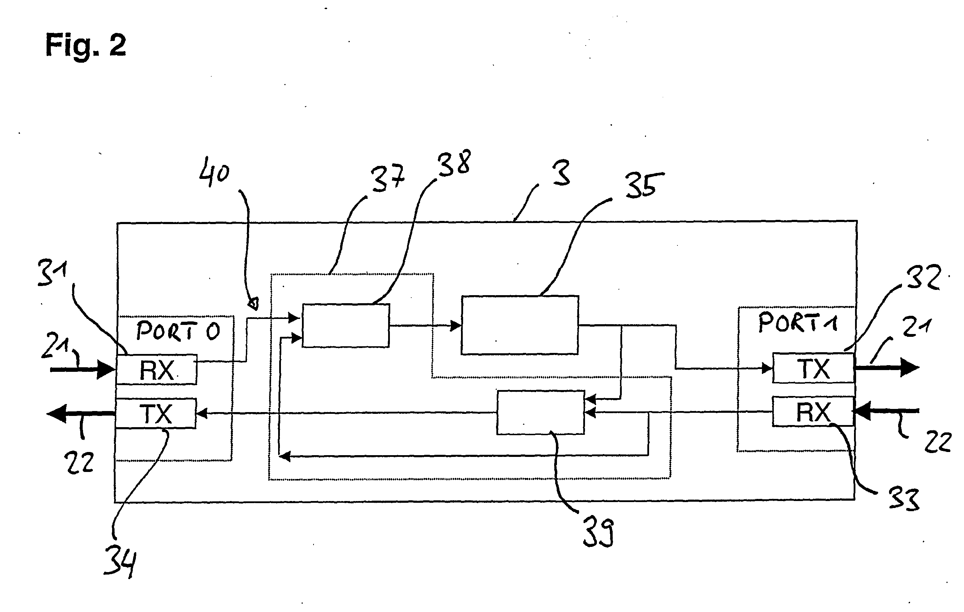

Das Prinzipschaltbild einer Slave-Einheit 3 ist in Figur 2 genauer dargestellt. In der Slave-Einheit 3 sind die erste Empfangseinheit RX31, die an den ersten Kommunikationspfad 21 angeschlossen ist, und die zweite Sendeeinheit TX34, die an den zweiten Kommunikationspfad 22 angeschlossen ist, als Port 0 gruppiert. Die zweite Empfangseinheit RX33, die an einen zweiten Kommunikationspfad 22 angeschlossen ist, und die erste Sendeeinheit TX32, die an den ersten Kommunikationspfad 21 angeschlossen ist, sind als Port 1 organisiert.

Die aktivierbare Kopplungseinrichtung 37 hat einen ersten Umschalter 38 und einen zweiten Umschalter 39 auf, die jeweils als 2-1-Multiplexer ausgelegt sind. Die Empfangs- und Sendeeinheit 31, 32, 33, 34, die Multiplexer 38, 39 der aktivierbaren Kopplungseinrichtung 37 und die Verarbeitungseinheit 35 sind dabei in der durch Pfeile in Figur 2 gezeigten Weise über ein Leitungsnetz 40 miteinander verschaltet.

Der Ausgang der ersten Empfangseinheit RX31 ist mit dem ersten Eingang des ersten Multiplexers 38 verbunden. Der zweite Eingang des ersten Multiplexers 38 ist an die zweite Empfangseinheit RX33 angeschlossen. Der Ausgang des ersten Multiplexers 38 ist weiterhin mit der Verarbeitungseinheit 35 verbunden. Der zweite Multiplexer 39 ist wiederum mit seinem ersten Eingang an die zweite Empfangseinheit RX 33 und mit seinem zweiten Eingang an den Ausgang der Verarbeitungseinheit 35 angeschlossen. Der Ausgang des zweiten Multiplexers 39 ist mit der zweiten Sendeeinheit TX34 verbunden. Außerdem ist der Ausgang der Verarbeitungseinheit 35 noch über das Leitungsnetz 40 mit der ersten Sendeeinheit TX32 verbunden.

Beim störungsfreien Normalbetrieb des Kommunikationssystems, wie er in Figur 1A gezeigt ist, übergibt die Sendesteuereinheit 16 des Master-Einheit an die erste Sendeeinheit TX11 und die zweite Sendeeinheit TX12 ein Telegramm, das dann von den beiden Sendeeinheiten gleichzeitig gegenläufig über den ersten Kommunikationspfad 21 und den zweiten Kommunikationspfad 22 geschickt wird. Die Telegramme durchlaufen dabei die angeschlossenen Slave-Einheiten 3 gegenläufig, wobei alle aktivierbaren Kopplungseinrichtungen 37 in den Slave-Einheiten 3 so geschaltet sind, dass der Eingang der Verarbeitungseinheit 35 mit der ersten Empfangseinheit RX31, der Ausgang der Ver-arbeitungseinheit 35 mit der ersten Sendeeinheit TX32 und die zweite Empfangseinheit RX33 mit der zweiten Sendeeinheit TX34 verbunden sind.

In diesem Betriebsmodus der Slave-Einheiten 3 sorgt die aktivierbare Kopplungseinrichtung 37 dafür, dass die beiden gegenläufig im ersten Kommunikationspfad 21 und im zweiten Kommunikationspfad 22 zirkulierenden identischen Telegramme die Slave-Einheit immer so durchlaufen, dass nur die über den ersten Kommunikationspfad 21 übertragenen Telegramme durch die Verarbeitungseinheit 35 verarbeitet werden. Das auf dem zweiten Kommunikationspfad 22 umlaufende Telegramm wird dagegen durch die Slave-Einheiten 3 nur durchgereicht und trifft unverarbeitet wieder bei der Master-Einheit 1 ein. Die beiden über den ersten und zweiten Kommunikationspfad 21, 22 gegenläufig zirkulierenden Telegramme werden dabei von der ersten Empfangseinheit RX13 und der zweiten Empfangseinheit RX14 der Master-Einheit 1 erkannt und über die zweite Steuerleitung 17 an die Empfangssteuereinheit 18 zur Auswertung weitergeleitet.

Bei der erfindungsgemäßen Auslegung wird also beim störungsfreien Normalbetrieb die aus den beiden 2-1-Multiplexern 38, 39 bestehende aktivierbare Kopplungseinrichtung 37 so gesteuert, dass von den beiden identischen Telegrammen die auf den beiden Kommunikationspfaden 21, 22 gleichzeitig, jedoch in entgegengesetzte Richtung zirkulieren, immer nur das Telegramm auf dem ersten Kommunikationspfad 21 durch die Verarbeitungseinheit 35 der Slave-Einheiten 3 zum Verarbeiten geleitet wird. Das auf dem zweiten Kommunikationspfad 22 umlaufende Telegramm dient zur Redundanz und wird unverändert auf die Master-Einheit 1 rückgekoppelt.

Das erfindungsgemäße Kommunikationssystem mit einer Master-Slave-Struktur, bei der die Slave-Einheiten seriell mit der Master-Einheit über zwei gegenläufig arbeitende Doppelringstrukturen verbunden sind, wobei nur eine einzelne Verarbeitungseinheit 35 in jeder Slave-Einheit 3 vorgesehen ist, besitzt weiterhin im Störfall, d.h. bei Auftreten eines Streckenfehlers, die Fähigkeit zur Rekonfiguration der Kommunikationspfade in den einzelnen Slave-Einheiten, um so die Funktionsfähigkeit des Gesamtkommunikationssystems aufrecht zu erhalten.

Figur 1B zeigt einen Streckendoppelfehler zwischen der Slave-Einheit M und der Slave-Einheit M+1. Figur 1C stellt einen Komplettausfall der Slave-Einheit M dar, was gleichbedeutend mit dem Auftreten von zwei Streckendoppelfehlern, einem zwischen Slave-Einheit M-1 und der Slave-Einheit M und zwischen der Slave-Einheit M+1 und der Slave-Einheit M ist. Beim Auftreten solcher Streckendoppelfehler wird die aktivierbare Kopplungseinrichtung 37 der Slave-Einheiten 3 so angesteuert, dass das entweder auf dem ersten Kommunikationspfad 21 oder dem zweiten Kommunikationspfad 22 eintreffende Telegramm auf dem jeweils anderen Kommunikationspfad an die Master-Einheit 1 rückgekoppelt wird, wobei das Telegramm vorher immer die Verarbeitungseinheit 35 der Slave-Einheit 3 durchläuft.

Bei dem in Figur 1B gezeigten Streckendoppelfehler zwischen der Slave-Einheit M und der Slave-Einheit M+1 erfolgt dies so, dass die Slave-Einheiten 1 bis M-1 und M+2 bis M sich im Normalbetrieb befinden, die Slave-Einheiten M und M+1 dagegen rekonfiguriert werden. Bei dem in Figur 1C gezeigten Fehlerfall, bei dem Slave-Einheit M total ausfällt, befinden sich die Slave-Einheiten 1 bis M-2, sowie die Slave-Einheiten M+2 bis M im Normalbetrieb. Die Slave-Einheiten M-1 und M+1 dagegen werden rekonfiguriert.

Die Rekonfiguration wird dabei vorzugsweise durch die beiden Ports 0 und 1 in den Slave-Einheiten 3 ausgelöst. Diese beiden Ports 0 und 1 erkennen durch ein bekanntes Erkennungsverfahren, ob die Slave-Einheit mit einer angrenzenden Slave-Einheit kommunizieren kann. Wenn ein Streckenfehler vom Port 0 oder Port 1 erkannt ist, wird dann ein entsprechender Fehlerbetrieb durchgeführt und die aktivierbare Kopplungseinrichtung 34 der Slave-Einheit in der gewünschten Weise angesteuert.

Beim Fehlerbetrieb des Ports 1, wie er beim in Figur 1B gezeigten Streckendoppelfehler in der Slave-Einheit M bzw. beim in Figur 1C gezeigten Geräteausfall in der Slave-Einheit M-1 auftritt, wird die aktivierbare Kopplungseinrichtung 37 so angesteuert, dass der Eingang der Verarbeitungseinheit 35 mit der ersten Empfangseinheit RX31 und der Ausgang der Verarbeitungseinheit 35 mit der zweiten Sendeeinheit TX34 verbunden ist. Das auf dem ersten Kommunikationspfad 21 umlaufende Telegramm wird so über die Verarbeitungseinheit 35 auf den zweiten Kommunikationspfad 21 rückgekoppelt. Bei der in Figur 2 gezeigten Auslegung der aktivierbaren Kopplungseinrichtung 37 in der Slave-Einheit 3 mit dem ersten Multiplexer 38 und dem zweiten Multiplexer 39 erfolgt dies so, dass der zweite Eingang des zweiten Multiplexers 39 auf seinen Ausgang geschaltet wird. Der erste Multiplexer 38 dagegen verbleibt im Normalbetrieb.

Beim Fehlerbetrieb des Ports 0 in der Slave-Einheit 3, d.h. dann, wenn die erste Empfangseinheit RX31 und/oder die zweite Sendeeinheit TX34 eine Unterbrechung des Kommunikationspfads zur benachbarten Slave-Einheit erkennt, was bei dem in Figur 1B gezeigten Streckendoppelfehler im Slave M+1 und bei dem in Figur 1C gezeigten Geräteausfall im Slave M+1 auftritt, wird die aktivierbare Kopplungseinrichtung 34 in der Slave-Einheit 3 so angesteuert, dass der Eingang der Verarbeitungseinheit 35 mit der zweiten Empfangseinheit RX33 und der Ausgang der Verarbeitungseinheit 35 mit der ersten Sendeeinheit TX32 verbunden wird, so dass das auf dem zweiten Kommunikationspfad 22 durchlaufende Telegramm nach Verarbeitung in der Verarbeitungseinheit 35 auf dem ersten Kommunikationspfad 21 zur Master-Einheit 1 rückgekoppelt wird. Bei der in Figur 2 gezeigten Ausführung der aktivierbaren Kopplungseinrichtung 34 erfolgt dies so, dass der erste Multiplexer 38 seinen zweiten Eingang auf seinen Ausgang aufschaltet, wohingegen der zweite Multiplexer 39 im Normalbetrieb verbleibt.

Mit der erfindungsgemäßen Vorgehensweise ist es somit möglich, auf einfache Weise bei einer Slave-Einheit mit nur einer Verarbeitungseinheit mithilfe einer Doppelringstruktur und einer aktivierbarer Kopplungseinrichtung Rekonfigurationsmaßnahmen im Kommunikationssystem vorzunehmen, um bei Streckenfehler die Funktionsfähigkeit des Kommunikationssystems zu gewährleisten, wobei das Verhalten der Slave-Einheiten bezogen auf die Telegrammverarbeitung im Redundanzfall sich nicht von der im Normalbetrieb unterscheidet.

Die erfindungsgemäße Vorgehensweise ermöglicht es neben dem in den Figuren 1B und 1C gezeigten Streckendoppelfehler, bei dem die beiden Kommunikationspfade zum benachbarten Teilnehmer unterbrochen sind, auch Streckeneinfachfehler, bei dem nur ein Kommunikationspfad unterbrochen ist, zu erkennen und durch entsprechendes Rekonfigurieren der an die Fehlerstelle angrenzenden Teilnehmer die Funktionsfähigkeit des Kommunikationssystems aufrecht zu erhalten.

In den Slave-Einheiten 3 ist auch immer nur eine Verarbeitungseinheit 35 vorgesehen, so dass im Vergleich zu Slave-Einheiten mit zwei Verarbeitungseinheit keine Entscheidung getroffen werden muss, welche Verarbeitungseinheit für die Telegrammverarbeitung zuständig ist.

Um eine hohe Fehlertoleranz des Kommunikationssystems bei niedrigem Hardware-Aufwand insbesondere auch in der Master-Einheit 1 zu erreichen, wird die Verarbeitung der gegenläufig auf dem ersten Kommunikationspfad 21 und dem zweiten Kommunikationspfad 22 umlaufenden Telegramme so ausgeführt, dass sich die Verarbeitung beim störungsfreien Normalbetrieb von der beim Fehlerbetrieb, bei dem die Funktionsfähigkeit des Kommunikationssystems bei Streckenfehlern durch Rekonfiguration von einzelnen Slave-Einheiten aufrecht erhalten wird, nicht wesentlich unterscheidet. Die Slave-Einheit kann in der erfindungsgemäßen Weise ausgelegt sein. Es besteht jedoch auch die Möglichkeit Slave-Einheiten mit einem anderen Schaltaufbau, der sich im Rahmen eines Master-Slave-Systems mit einer Doppelringstruktur verwenden lässt, einzusetzen.

Erfindungsgemäß werden in der Master-Einheit 1 die beiden von der ersten Empfangseinheit RX13 auf dem ersten Kommunikationspfad 21 und von der zweiten Empfangseinheit RX14 auf dem zweiten Kommunikationspfad 22 in der Master-Einheit 1 empfangenen Telegramme in der Empfangssteuereinheit 18 überlagert, um so ein einzelnes Telegramm herzustellen. Dies geschieht vorzugsweise dadurch, dass die Nutzdaten der beiden Telegramme bitweise verodert werden.

Weiterhin weisen die Telegramme im Steuerdatenbereich jeweils ein Zählerfeld auf, dessen Wert ausgewertet, vorzugsweise aufaddiert wird, um den Betriebszustand im Kommunikationssystem, insbesondere das Auftreten eines Streckenfehlers, festzustellen. Dies erfolgt erfindungsgemäß so, dass die Sendesteuereinheit 16 der Master-Einheit 1 an die erste Sendeeinheit TX11 und die zweite Sendeeinheit TX12 jeweils ein identisches Telegramm mit einem Datenfeld und einem auf einen vorgegebenen Wert gesetzten Zählerfeld zum getrennten gegenläufigen Senden auf dem ersten Kommunikationspfad 21 und dem zweiten Kommunikationspfad 22 übergibt. Die Verarbeitungseinheit 35 jeder angeschlossenen Slave-Einheit 3 ist weiterhin so ausgelegt, dass beim Durchlauf des Telegramms der Wert des Zählerfeldes um einen vorgegebenen Wert verändert wird. In der Empfangssteuereinheit 18 werden dann jeweils der Wert des Zählerfeldes der beiden von der ersten Empfangseinheit RX13 auf dem ersten Kommunikationspfad 21 und von der zweiten Empfangseinheit RX14 auf dem zweiten Kommunikationspfad 22 empfangenen Telegramme ausgewertet. Aus den Werten der beiden Zählerfelder kann dann durch einfaches Aufaddieren festgestellt werden, ob alle angeschlossenen Slave-Einheiten aktiv sind.

Bevorzugt geschieht dies so, dass das Zählerfeld des Telegramms beim gegenläufigen Senden auf den Wert 0 gesetzt wird und jede Verarbeitungseinheit 35 beim Durchlauf des Telegramms durch die Slave-Einheit 3 den Wert des Zählerfeldes um 1 erhöht. Da durch die erfindungsgemäße Auslegung der Teilnehmer sowohl im Normalbetrieb als auch im Fehlerbetrieb bei Rekonfiguration der Teilnehmerschaltung immer nur ein Telegramm durch die Verarbeitungseinheit verarbeitet wird, gibt der addierte Wert der Zählerfelder der beiden auf die Master-Einheit 1 rückgekoppelten Telegramme die Anzahl der aktiven Teilnehmer an. Es kann somit ermittelt werden, ob alle angeschlossenen Teilnehmer aktiv sind oder ob ein Totalausfall eines Teilnehmers, z.B. durch zweifachen Streckendoppelfehler, wie in Figur 1C gezeigt, aufgetreten ist. Außerdem kann durch Vergleich der Werte in den beiden Zählerfeldern unter Zugrundelegen der bekannten Anzahl von angeschlossenen Slave-Einheiten die genaue Position des Streckenfehlers, z.B. das Auftreten zwischen der Slave-Einheit M und der Slave-Einheit M+1 in Figur 1B, festgestellt werden.

Ein fehlertoleranter Betrieb des Kommunikationssystems, insbesondere auch bei Rekonfiguration, des Kommunikationssystems durch Verändern des Signallaufs in den Teilnehmern bei Auftreten eines Streckenfehlers wird weiterhin dadurch erreicht, dass die beiden identischen, gegenläufig auf dem ersten Kommunikationspfad 21 und dem zweiten Kommunikationspfad 22 umlaufenden Telegramme so ausgelegt sind, dass im Nutzdatenfeld jeder angeschlossenen Slave-Einheit ein Datenbereich zugeordnet ist. Die Verarbeitungseinheit 35 jeder Slave-Einheit 3 führt mit dem durchlaufenden Telegramm einen Datenaustausch in dem zugeordneten Datenbereich durch. In der Empfangssteuereinheit 18 der Master-Einheit 1 werden dann die Nutzdatenfelder der beiden von der ersten Empfangseinheit RX13 auf dem ersten Kommunikationspfad 21 und von der zweiten Empfangseinheit RX14 auf dem zweiten Kommunikationspfad 22 empfangenen Telegramme überlagert, so dass sich ein gemeinsames Telegramm ergibt. Dieses überlagerte Telegramm ist immer gleich, egal ob das Kommunikationssystem sich im Normalbetrieb oder im Fehlerbetrieb bei Auftreten eines Streckenfehlers befindet, solange noch alle Slave-Einheiten 3 aktiv sind.

Beim Lesebetrieb, dann, wenn die Slave-Einheiten 3 Daten zur Master-Einheit 1 übertragen sollen, wird von der Sendesteuereinheit 16 der Master-Einheit 1 über die erste Steuerleitung 15 den beiden Sendeeinheiten TX11, TX12 ein Telegramm übergeben, das im gesamten Nutzdatenfeld auf den Wert O gesetzt ist. Die Verarbeitungseinheiten 35 der Slave-Einheiten 3 schreiben dann in die zugeordneten Nutzdatenbereichen die gewünschten Daten ein. Die Empfangssteuereinheit 18 der Master-Einheit 1 verodert anschließend die Nutzdatenfelder der beiden von der ersten Empfangseinheit RX13 auf dem ersten Kommunikationspfad 21 und von der zweiten Empfangseinheit RX 14 auf dem zweiten Kommunikationspfad 22 empfangenen Telegramme, um ein gemeinsames Telegramm zu bilden. Unbesehen davon, ob das Kommunikationssystem sich im Normalbetrieb oder im Rekonfigurationsbetrieb befindet, enthält das veroderte Telegramm immer alle von der Master-Einheit 1 angeforderten Daten der angeschlossenen Slave-Einheiten 3.

Beim Schreibbetrieb dagegen, dann, wenn die Master-Einheit 1 über die erste Steuerleitung 15 z.B. Steuerbefehle auf die Slave-Einheiten 3 übertragen möchte, übergibt die Sendesteuereinheit 16 der Master-Einheit 1 an die Sendeeinheiten TX11, TX12 ein Telegramm mit einem Nutzdatenfeld, das die zu den Slave-Einheiten 3 zu übertragenden Daten enthält, zum gleichzeitigen gegenläufigen Senden auf den beiden Kommunikationspfaden 21, 22. Die Verarbeitungseinheiten 35 der Slave-Einheiten 3 entnehmen dann, gleichgültig, ob sie sich im Normalbetrieb oder im Rekonfigurationsbetrieb befinden, die zugeordneten Daten aus dem Telegramm. Ein Verodern der Nutzdatenfelder der beiden auf die Master-Einheit 1 rückgekoppelten und von der ersten Empfangseinheit RX13 und zweiten Empfangseinheit RX14 empfangenen Telegramme ist dann prinzipiell nicht mehr erforderlich. Ein solcher Veroder-Vorgang führt zu einem gemeinsamen Telegramm mit einem Nutzdatenfeld, das dem Nutzdatenfeld des gesendeten Telegramms entspricht.

Mit der erfindungsgemäßen Auslegung des Master-Slave-Kommunikationssystems besteht bei beliebiger Ausgestaltung der einzelnen Slave-Einheit, insbesondere jedoch dann, wenn die Slave-Einheiten auf die erfindungsgemäße Weise aufgebaut sind und betrieben werden, für die Master-Einheit auf einfache Weise die Möglichkeit, die Störungsfreiheit im Kommunikationssystem insbesondere auch bei einer Rekonfiguration des Signallaufs in der Doppelringstruktur nach Auftreten eines Streckenfehlers festzustellen. Weiterhin ist im Kommunikationssystem auch im redundanten Fall, also dann, wenn im Kommunikationssystem einzelne Teilnehmer auf Fehlerbetrieb umgeschaltet haben, ein zuverlässiger Lese- und Schreibbetrieb durch Überlagerung der Nutzdatenfelder der beiden rückgekoppelten Telegramm gewährleistet.

## Patentansprüche

1. Master-Einheit für ein Kommunikationssystem mit einer Master-Slave-Struktur, mit
einer ersten mit einem ersten Kommunikationspfad (21) verbundenen Sendeeinheit (11) zum Senden von Informationssignalen auf dem ersten Kommunikationspfad (21), einer zweiten mit einem zweiten Kommunikationspfad (22) verbundenen Sendeeinheit (12) zum Senden von Informationssignalen auf dem zweiten Kommunikationspfad (22), einer ersten mit dem ersten Kommunikationspfad (21) verbundenen Empfangseinheit (13) zum Empfangen von Informationssignalen auf dem ersten Kommunikationspfad (21), und
einer zweiten mit dem zweiten Kommunikationspfad (22) verbundenen Empfangseinheit (14) zum Empfangen von Informationssignalen auf dem zweiten Kommunikationspfad (22),
**gekennzeichnet durch**
eine mit der ersten Sendeeinheit (11) und der zweiten Sendeeinheit (12) verbundene Sendesteuereinheit (16), und
eine mit der ersten Empfangseinheit (13) und der zweiten Empfangseinheit (14) verbundene Empfangssteuereinheit (18),
wobei die Sendesteuereinheit (18) im Lesebetrieb der Master-Einheit ausgelegt ist, um an die erste Sendeeinheit (11) und die zweite Sendeeinheit (12) ein Informationssignal mit einem Datenfeld, das für jeden angeschlossenen Teilnehmer (3) einen zugeordneten Datenbereich aufweist, zum getrennten gegenläufigen Senden auf dem ersten Kommunikationspfad (21) und dem zweiten Kommunikationspfad (22) zu übergeben, und
wobei die Empfangssteuereinheit (18) im Lesebetrieb ausgelegt ist, um die Datenfelder der beiden von der ersten Empfangseinheit (13) auf dem ersten Kommunikationspfad (21) und von der zweiten Empfangseinheit (14) auf dem zweiten Kommunikationspfad (22) empfangenen Informationssignale zu überlagern.

2. Master-Einheit nach Anspruch 1, **dadurch gekennzeichnet, dass** das von der Sendesteuereinheit (18) im Lesebetrieb an die erste Sendeeinheit (11) und die zweite Sendeeinheit (12) übergebenen Informationssignal ein auf den Wert 0 gesetztes Datenfeld aufweist,
wobei die Empfangssteuereinheit (18) im Lesebetrieb ausgelegt ist, um die Datenfelder der beiden von der ersten Empfangseinheit (13) auf dem ersten Kommunikationspfad (21) und von der zweiten Empfangseinheit (14) auf dem zweiten Kommunikationspfad (22) empfangenen Informationssignale zu verodern.

3. Kommunikationssystem mit einer Master-Slave-Struktur, das eine Master-Einheit (1) nach Anspruch 1 oder 2 und eine Mehrzahl von Teilnehmern als Slave-Einheiten (3) aufweist, die über den ersten Kommunikationspfad (21) und den zweiten Kommunikationspfad (22) miteinander verbunden sind, wobei der erste Kommunikationspfad (21) und der zweite Kommunikationspfad (22) gegenläufig zueinander arbeiten.

4. Kommunikationssystem nach Anspruch 3, **dadurch gekennzeichnet, dass** jeder Teilnehmer (3) eine erste mit dem ersten Kommunikationspfad (21) verbundene Empfangseinheit (31) zum Empfang von Informationssignalen auf dem ersten Kommunikationspfad (21), eine erste mit dem ersten Kommunikationspfad verbundene Sendeeinheit (32) zum Senden von Informationssignalen auf dem ersten Kommunikationspfad (21), eine zweite mit dem zweiten Kommunikationspfad (22) verbundene Empfangseinheit (33) zum Empfang von Informationssignalen auf dem zweiten Kommunikationspfad (22) und eine zweite mit dem zweiten Kommunikationspfad verbundene Sendeeinheit (34) zum Senden von Informationssignalen auf dem zweiten Kommunikationspfad (22), eine einen Eingang und einen Ausgang aufweisende Verarbeitungseinheit (35) zum Verarbeiten von Informationssignalen und eine aktivierbare Kopplungseinrichtung (37) aufweist, wobei die aktivierbare Kopplungseinrichtung (37) ausgelegt ist, um im Normalbetrieb den Eingang der Verarbeitungseinheit (35) mit der ersten Empfangseinheit (31), den Ausgang der Verarbeitungseinheit mit der ersten Sendeeinheit (32) und die zweite Empfangseinheit (33) mit der zweiten Sendeeinheit (34) zu verbinden, im Fehlerbetrieb der ersten Sendeeinheit (32) und/oder der zweiten Empfangseinheit (33) den Eingang der Verarbeitungseinheit (35) mit der ersten Empfangseinheit (31) und den Ausgang der Verarbeitungseinheit (35) mit der zweiten Sendeeinheit (34) zu verbinden, und im Fehlerbetrieb der ersten Empfangseinheit (31) und/oder der zweiten Sendeeinheit (34) den Eingang der Verarbeitungseinheit (35) mit der zweiten Empfangseinheit (33) und den Ausgang der Verarbeitungseinheit (35) mit der ersten Sendeeinheit (32) zu verbinden.

5. Kommunikationssystem nach Anspruch 4, **dadurch gekennzeichnet, dass** die aktivierbare Kopplungseinrichtung (37) jedes Teilnehmers (3) einen ersten Multiplexer (38), dessen erster Eingang mit der ersten Empfangseinheit (31), dessen zweiter Eingang mit der zweiten Empfangseinheit (33) und dessen Ausgang mit dem Eingang der Verarbeitungseinheit (35) verbunden ist und einen zweiten Multiplexer (39), dessen erster Eingang mit der zweiten Empfangseinheit (35), dessen zweiter Eingang mit dem Ausgang der Verarbeitungseinheit (35) und dessen Ausgang mit der zweiten Sendeeinheit (34) verbunden ist, aufweist, wobei der erste Multiplexer (38) ausgelegt ist, um im Normalbetrieb seinen ersten Eingang auf seinen Ausgang und im Fehlerbetrieb der ersten Empfangseinheit (31) und/oder der zweiten Sendeeinheit (34) seinen zweiten Eingang auf seinen Ausgang aufzuschalten, und wobei der zweite Multiplexer (39) ausgelegt ist, um im Normalbetrieb seinen ersten Eingang auf seinen Ausgang und im Fehlerbetrieb der ersten Sendeeinheit (32) und/oder der zweiten Empfangseinheit (33) seinen zweiten Eingang auf seinen Ausgang aufzuschalten.

6. Kommunikationssystem nach Anspruch 4 oder 5, **dadurch gekennzeichnet, dass** in jedem Teilnehmer (3) die erste Sendeeinheit (32) und die zweite Sendeeinheit (34) und/oder die erste Empfangseinheit (31) und die zweite Empfangseinheit (33) ausgelegt sind, einen Streckenfehler im angeschlossenen Kommunikationspfad (21, 22) festzustellen und einen entsprechenden Fehlerbetrieb anzustoßen.

7. Kommunikationssystem nach einem der Ansprüche 4 bis 6, **dadurch gekennzeichnet, dass** die Sendesteuereinheit (16) der Master-Einheit (1) ausgelegt ist, um an die erste Sendeeinheit (11) und die zweite Sendeeinheit (12) das Informationssignal mit einem auf einen vorgebenden Wert gesetzten Zählerfeld zum getrennten gegenläufigen Senden auf dem ersten Kommunikationspfad (21) und dem zweiten Kommunikationspfad (22) zu übergeben, wobei die Verarbeitungseinheit (35) jedes Teilnehmers ausgelegt ist, um beim Durchlauf des Informationssignals den Wert des Zählerfeldes um einen vorgebenden Wert zu verändern, und die Empfangssteuereinheit (18) der Master-Einheit (1) ausgelegt ist, um jeweils den Wert der Zählerfelder der beiden von der ersten Empfangseinheit (13) auf dem ersten Kommunikationspfad (31) und von der zweiten Empfangseinheit (14) auf dem zweiten Kommunikationspfad (22) empfangenen Informationssignale auszuwerten.

8. Kommunikationssystem nach Anspruch 7, **dadurch gekennzeichnet, dass** die Empfangssteuereinheit (18) der Master-Einheit (1) ausgelegt ist, um den Wert der Zählerfelder von der ersten Empfangseinheit (13) auf dem ersten Kommunikationspfad (21) und von der zweiten Empfangseinheit (14) auf dem zweiten Kommunikationspfad (22) empfangenen Informationssignale aufzuaddieren.

9. Verfahren zum Betreiben eines Kommunikationssystems mit einer Master-Slave-Struktur, das eine Master-Einheit (1) und eine Mehrzahl von Teilnehmern (3) als Slave-Einheiten aufweist, wobei die Slave-Einheiten (3) seriell mit der Master-Einheit (1).über eine aus dem ersten Kommunikationspfad (21) und dem zweiten Kommunikationspfad (22) gebildete gegenläufig arbeitende Doppelringstruktur (2) verbunden sind, wobei die Master-Einheit (1) eine erste mit dem ersten Kommunikationspfad verbundene Sendeeinheit (11) zum Senden von Informationssignalen auf dem ersten Kommunikationspfad (21), eine zweite mit dem zweiten Kommunikationspfad verbundene Sendeeinheit (12) zum Senden von Informationssignalen auf dem zweiten Kommunikationspfad (22), eine erste mit dem ersten Kommunikationspfad verbundene Empfangseinheit (13) zum Empfangen von Informationssignalen auf dem ersten Kommunikationspfad (21), eine zweite mit dem zweiten Kommunikationspfad (22) verbundene Empfangseinheit (14) zum Empfangen von Informationssignalen auf dem zweiten Kommunikationspfad (22), eine mit der ersten Sendeeinheit (11) und der zweiten Sendeeinheit (12) verbundene Sendesteuereinheit (16) und eine mit der ersten Empfangseinheit (13) und der zweiten Empfangseinheit (14) verbundene Empfangssteuereinheit (18) aufweist,
**dadurch gekennzeichnet, dass** im Lesebetrieb die Sendesteuereinheit (16) der Master-Einheit (1) an die erste Sendeeinheit (11) und die zweite Sendeeinheit (12) ein Informationssignal mit einem Datenfeld, das für jeden angeschlossenen Teilnehmer (3) einen zugeordneten Datenbereich aufweist, zum getrennten gegenläufigen Senden auf dem ersten Kommunikationspfad (21) und dem zweiten Kommunikationspfad (22) übergibt, und eine Verarbeitungseinheit (35) jedes Teilnehmers beim Verarbeiten des durchlaufenden Informationssignals in den zugeordneten Datenbereich einschreibt, und die Empfangssteuereinheit (18) der Master-Einheit (1) die Datenfelder der beiden von der ersten Empfangseinheit (13) auf dem ersten Kommunikationspfad (21) und von der zweiten Empfangseinheit (14) auf dem zweiten Kommunikationspfad (22) empfangenen Informationssignale überlagert.

10. Verfahren nach Anspruch 9, **dadurch gekennzeichnet, dass** das von der Sendesteuereinheit (18) der Master-Einheit (1) im Lesebetrieb an die erste Sendeeinheit (11) und die zweite Sendeeinheit (12) übergebenen Informationssignal ein auf den Wert 0 gesetztes Datenfeld aufweist, wobei die Empfangssteuereinheit (18) der Master-Einheit (1) im Lesebetrieb die Datenfelder der beiden von der ersten Empfangseinheit (13) auf dem ersten Kommunikationspfad (21) und von der zweiten Empfangseinheit (14) auf dem zweiten Kommunikationspfad (22) empfangenen Informationssignale verodert.

11. Verfahren nach Anspruch 9 oder 10, **dadurch gekennzeichnet, dass** die Sendesteuereinheit (16) der Master-Einheit (1) an die erste Sendeeinheit (11) und die zweite Sendeeinheit (12) das Informationssignal mit einem auf einen vorgebenden Wert gesetzten Zählerfeld zum getrennten gegenläufigen Senden auf dem ersten Kommunikationspfad (21) und dem zweiten Kommunikationspfad (22) übergibt, wobei die Verarbeitungseinheit (35) jedes Teilnehmers beim Durchlauf des Informationssignals den Wert des Zählerfeldes um einen vorgebenden Wert verändert und die Empfangssteuereinheit (18) jeweils den Wert der Zählerfelder der beiden von der ersten Empfangseinheit (13) auf dem ersten Kommunikationspfad (21) und von der zweiten Empfangseinheit (14) auf dem zweiten Kommunikationspfad (22) empfangenen Informationssignale auswertet.

12. Verfahren nach Anspruch 11, **dadurch gekennzeichnet, dass** die Empfangssteuereinheit (18) der Master-Einheit (1) den Wert der Zählerfelder der von der ersten Empfangseinheit (13) auf dem ersten Kommunikationspfad (21) und von der zweiten Empfangseinheit (14) auf dem zweiten Kommunikationspfad (22) empfangenen Informationssignale aufaddiert.

13. Verfahren nach einem der Ansprüche 9 bis 12, **dadurch gekennzeichnet, dass** jeder Teilnehmer (3) eine erste mit dem ersten Kommunikationspfad verbundene Empfangseinheit (31) zum Empfang von Informationssignalen auf dem ersten Kommunikationspfad (21), eine erste mit dem ersten Kommunikationspfad verbundene Sendeeinheit (32) zum Senden von Informationssignalen auf dem ersten Kommunikationspfad (21), eine zweite mit dem zweiten Kommunikationspfad verbundene Empfangseinheit (33) zum Empfang von Informationssignalen auf dem zweiten Kommunikationspfad (22) und eine zweite mit dem zweiten Kommunikationspfad verbundene Sendeeinheit (34) zum Senden von Informationssignalen auf dem zweiten Kommunikationspfad (22) und eine aktivierbare Kopplungseinrichtung (37) aufweist, wobei die aktivierbare Kopplungseinrichtung (37) im Normalbetrieb einen Eingang der Verarbeitungseinheit (35) mit der ersten Empfangseinheit (21), einen Ausgang der Verarbeitungseinheit (35) mit der ersten Sendeeinheit (38) und die zweite Empfangseinheit (33) mit der zweiten Sendeeinheit (34) verbindet, im Fehlerbetrieb der ersten Sendeeinheit (32) und/oder zweiten Empfangseinheit (33) den Eingang der Verarbeitungseinheit (35) mit der ersten Empfangseinheit (31) und den Ausgang der Verarbeitungseinheit (35) mit der zweiten Sendeeinheit (34) verbindet und im Fehlerbetrieb der ersten Empfangseinheit (31) und/oder zweiten Sendeeinheit (34) den Eingang der Verarbeitungseinheit (35) mit der zweiten Empfangseinheit (33) und den Ausgang der Verarbeitungseinheit mit der ersten Sendeeinheit (32) verbindet.

14. Verfahren nach Anspruch 13, **dadurch gekennzeichnet, dass** die aktivierbare Kopplungseinrichtung (37) einen erste Multiplexer (38), dessen erster Eingang mit der ersten Empfangseinheit (31), dessen zweiter Eingang mit der zweiten Empfangseinheit (33) und dessen Ausgang mit dem Eingang der Verarbeitungseinheit (35) verbunden ist, und einen zweite Multiplexer (39), dessen erster Eingang mit der zweiten Empfangseinheit (33), dessen zweiter Eingang mit dem Ausgang der Verarbeitungseinheit (35) und dessen Ausgang mit der zweiten Sendeeinheit (34) verbunden ist, aufweist, wobei der erste Multiplexer (38) im Normalbetrieb seinen ersten Eingang auf seinen Ausgang und im Fehlerbetrieb der ersten Empfangseinheit (31) und/oder der zweiten Sendeeinheit (34) seinen zweiten Eingang auf seinen Ausgang aufschaltet und wobei der zweite Multiplexer (39) im Normalbetrieb seinen ersten Eingang auf seinen Ausgang und im Fehlerbetrieb der ersten Sendeeinheit (31) und/oder der zweiten Empfangseinheit (34) seinen zweiten Eingang auf seinen Ausgang aufschaltet.

15. Verfahren nach Anspruch 13 oder 14, **dadurch gekennzeichnet, dass** die erste Sendeeinheit (32) und die zweiten Sendeeinheit (34) und/oder die erste Empfangseinheit (31) und die zweite Empfangseinheit (33) ausgelegt sind, einen Streckenfehler im angeschlossenen Kommunikationspfad (21, 22) festzustellen und einen entsprechenden Fehlerbetrieb anzustoßen.

16. Verfahren nach einem der Ansprüche 9 bis 15, das zur Steuerung und Regelung einer Mehrzahl von Stellmotoren dient.

## Claims

1. A master unit for a communication system having a master-slave structure, comprising
a first transmitting unit (11), connected to a first communication path (21), for transmitting information signals on the first communication path (21), a second transmitting unit (12), connected to a second communication path (22), for transmitting information signals on the second communication path (22),
a first receiving unit (13), connected to the first communication path (21), for receiving information signals on the first communication path (21), and
a second receiving unit (14), connected to the second communication path (22), for receiving information signals on the second communication path (22),
**characterized by**
a transmit control unit (16) connected to the first transmitting unit (11) and the second transmitting unit (12), and
a receive control unit (18) connected to the first receiving unit (13) and the second receiving unit (14),
wherein the transmit control unit (18), in read mode of the master unit, is designed for transferring to the first transmitting unit (11) and the second transmitting unit (12) an information signal with a data field which has for each connected user (3) an associated data area, for separately transmitting in opposite directions on the first communication path (21) and the second communication path (22),
and wherein the receive control unit (18), in read mode, is designed for superimposing the data fields of the two information signals received by the first receiving unit (13) on the first communication path (21) and by the second receiving unit (14) on the second communication path (22).

2. The master unit as claimed in claim 1,
**characterized in that** the information signal transferred to the first transmitting unit (11) and the second transmitting unit (12) by the transmit control unit (18) in read mode has a data field set to the value 0,
wherein the receive control unit (18), in read mode, is designed for oring the data fields of the two information signals received by the first receiving unit (13) and the first communication path (21) and by the second receiving unit (14) on the second communication path (22).

3. A communication system comprising a master-slave structure which has a master unit (1) as claimed in claim 1 or 2 and a multiplicity of users as slave units (3) which are connected to one another via the first communication path (21) and the second communication path (22), the first communication path (21) and the second communication path (22) operating in opposite directions to one another.

4. The communication system as claimed in claim 3, **characterized in that** each user (3) has a first receiving unit (31), connected to the first communication path (21), for receiving information signals on the first communication path (21), a first transmitting unit (32), connected to the first communication path, for transmitting information signals on the first communication path (21), a second receiving unit (33) connected to the second communication path (22), for receiving information signals on the second communication path (22) and a second transmitting unit (34), connected to the second communication path, for transmitting information signals on the second communication path (22), a processing unit (35), having an input and an output, for processing information signals, and a coupling device (37) which can be activated, the coupling device (37) which can be activated being designed for connecting the input of the processing unit (35) to the first receiving unit (31), the output of the processing unit to the first transmitting unit (32) and the second receiving unit (33) to the second transmitting unit (34) in normal mode, connecting the input of the processing unit (35) to the first receiving unit (31) and the output of the processing unit (35) to the second transmitting unit (34) in fault mode of the first transmitting unit (32) and/or of the second receiving unit (33), and connecting the input of the processing unit (35) to the second receiving: unit (33) and the output of the processing unit (35) to the first transmitting unit (32) in fault mode of the first receiving unit (31) and/or of the second transmitting unit (34).

5. The communication system as claimed in claim 4, **characterized in that** the coupling device (37), which can be activated, of each user (3) has a first multiplexer (38), the first input of which is connected to the first receiving unit (31), the second input of which is connected to the second receiving unit (33) and the output of which is connected to the input of the processing unit (35), and a second multiplexer (39), the first input of which is connected to the second receiving unit (35), the second input of which is connected to the output of the processing unit (35) and the output of which is connected to the second transmitting unit (34), the first multiplexer (38) being designed for connecting its first input to its output in normal mode and its second input to its output in fault mode of the first receiving unit (31) and/or of the second transmitting unit (34), and the second multiplexer (39) being designed for connecting its first input to its output in normal mode and its second input to its output in fault mode of the first transmitting unit (32) and/or of the second receiving unit (33).

6. The communication system as claimed in claim 4 or 5, **characterized in that** in each user (3), the first transmitting unit (32) and the second transmitting unit (34) and/or the first receiving unit (31) and the second receiving unit (33) are designed for detecting a link fault on the connected communication path (21, 22) and initiating a corresponding fault mode.

7. The communication system as claimed in one of claims 4 to 6, **characterized in that** the transmit control unit (16) of the master unit (1) is designed for transferring to the first transmitting unit (11) and the second transmitting unit (12) the information signal having a counterfield set to a predetermined value for separately transmitting in opposite directions on the first communication path (21) and the second communication path (22), wherein the processing unit (35) of each user is designed for altering the value of the counterfield by a predetermined value when the information signal passes through, and the receive control unit (18) of the master unit (1) is designed for in each case evaluating the value of the counterfields of the two information signals received by the first receiving unit (13) on the first communication path (31) and by the second receiving unit (14) on the second communication path (22).

8. The communication system as claimed in claim 7, **characterized in that** the receive control unit (18) of the master unit (1) is designed for adding the value of the counterfields of information signals received by the first receiving unit (13) on the first communication path (21) and by the second receiving unit (14) on the second communication path (22).

9. A method for operating a communication system having a master-slave structure which has a master unit (1) and a multiplicity of users (3) as slave units, wherein the slave units (3) are connected serially to the master unit (1) via a dual-ring structure (2) formed from the first communication path (21) and the second communication path (22) and operating in opposite directions, wherein the master unit (1) has a first transmitting unit: (11), connected to the first communication path, for transmitting information signals on the first communication path (21), a second transmitting unit (12), connected to the second communication path, for transmitting information signals on the second communication path (22), a first receiving unit (13), connected to the first communication path, for receiving information signals on the first communication path (21), a second receiving unit (14) connected to the second communication path (22), for receiving information signals on the second communication path (22), a transmit control unit (16) connected to the first transmitting unit (11) and the second transmitting unit (12), and a receive control unit (18) connected to the first receiving unit (13) and the second receiving unit (14),
**characterized in that,** in read mode, the transmit control unit (16) of the master unit (1) transfers to the first transmitting unit (11) and the second transmitting unit (12) an information signal with a data field which has an associated data area for each connected user (3), for separately transmitting in opposite directions on the first communication path (21) and the second communication path (22), and a processing unit (35) of each user writes into the associated data area during the processing of the information signal passing through, and the receive control unit (18) of the master unit (1) superimposes the data fields of the two information signals received by the first receiving unit (13) on the first communication path (21) and by the second receiving unit (14) on the second communication path (22).

10. The method as claimed in claim 9, **characterized in that** the information signal transferred to the first transmitting unit (11) and the second transmitting unit (12) by the transmit control unit (18) of the master unit (1) in read mode has a data field set to the value 0, wherein the receive control unit (18) of the master unit (1), in read mode, ores the data fields of the two information signals received by the first receiving unit (13) on the first communication path (21) and by the second receiving unit (14) on the second communication path (22).

11. The method as claimed in claim 9 or 19, **characterized in that** the transmit control unit (16) of the master unit (1) transfers to the first transmitting unit (11) and the second transmitting unit (12) the information signal having a counterfield set to a predetermined value, for separately transmitting in opposite directions on the first communication path (21) and the second communication path (22), wherein the processing unit (35) of each user changes the value of the counterfield by a predetermined value when the information signal passes through, and the receive control unit (18) in each case evaluates the value of the counterfields of the two information signals received by the first receiving unit (13) on the first communication path (21) and by the second receiving unit (14) on the second communication path (22).

12. The method as claimed in claim 11, **characterized in that** the receive control unit (18) of the master unit (1) adds together the value of the counterfields of the information signals received by the first receiving unit (13) on the first communication path (21) and by the second receiving unit (14) on the second communication path (22).

13. The method as claimed in one of claims 9 to 12, **characterized in that** each user (3) has a first receiving unit (31), connected to the first communication path, for receiving information signals on the first communication path (21), a first transmitting unit (32), connected to the first communication path, for transmitting information signals on the first communication path (21), a second receiving unit (33) connected to the second communication path for receiving information signals on the second communication path (22) and a second transmitting unit (34), connected to the second communication path for transmitting information signals on the second communication path (22), and a coupling device (37) which can be activated, wherein the coupling device (37) which can be activated, connects an input of the processing unit (35) to the first receiving unit (21), an output of the processing unit (35) to the first transmitting unit (38) and the second receiving unit (33) to the second transmitting unit (34) in normal mode, the input of the processing unit (35) to the first receiving unit (31) and the output of the processing unit (35) to the second transmitting unit (34) in fault mode of the first transmitting unit (32) and/or second receiving unit (33), and the input of the processing unit (35) to the second receiving unit (33) and the output of the processing unit to the first transmitting unit (32) in fault mode of the first receiving unit (31) and/or second transmitting unit (34).

14. The method as claimed in claim 13, **characterized in that** the coupling device (37) which can be activated has a first multiplexer (38), the first input of which is connected to the first receiving unit (31), the second input of which is connected to the second receiving unit (33) and the output of which is connected to the input of the processing unit (35), and a second multiplexer (39), the first input of which is connected to the second receiving unit (33), the second input of which is connected to the output of the processing unit (35) and the output of which is connected to the second transmitting unit (34), wherein the first multiplexer (38) connects its first input to its output in normal mode and its second input to its output in fault mode of the first receiving unit (31) and/or of the second transmitting unit (34), and wherein the second multiplexer (39) connects its first input to its output in normal mode and its second input to its output in fault mode of the first transmitting unit (31) and/or the second receiving unit (34).

15. The method as claimed in claim 13 or 14, **characterized in that** the first transmitting unit (32) and the second transmitting unit (34) and/or the first receiving unit (31) and the second receiving unit (33) are designed for detecting a link fault on the connected communication path (21, 22) and activating a corresponding fault mode.

16. The method as claimed in one of claims 9 to 15, which is used for controlling and regulating a multiplicity of servomotors.

## Revendications

1. Unité maître pour un système de communication avec une structure maître-esclave comportant
une première unité émettrice (11) reliée à une première voie de communication (21) pour émettre des signaux d'information sur la première voie de communication (21),
une seconde unité émettrice (12) reliée à une seconde voie de communication (22) pour émettre des signaux d'information sur la seconde voie de communication (22),
une première unité réceptrice (13) reliée à la première voie de communication (21) pour recevoir des signaux d'information sur la première voie de communication (21), et
une seconde unité réceptrice (14) reliée à la seconde voie de communication (22) pour recevoir des signaux d'information sur la seconde voie de communication (22),
**caractérisée par**
une unité de commande d'émission (16) reliée à la première unité émettrice (11) et à la seconde unité émettrice (12), et
une unité de commande de réception (18) reliée à la première unité réceptrice (13) et à la seconde unité réceptrice (14),
dans laquelle l'unité de commande d'émission (18) est conçue, en mode lecture de l'unité maître, pour transmettre à la première unité émettrice (11) et à la seconde unité émettrice (12) un signal d'information avec un champ de données, qui comporte pour chaque participant (3) raccordé une zone de données associée, en vue de l'émission en sens contraires et séparée sur la première voie de communication (21) et la seconde voie de communication (22), et
dans laquelle l'unité de commande de réception (18) est conçue en mode lecture pour superposer les champs de données des deux signaux d'information reçus par la première unité réceptrice (13) sur la première voie de communication (21) et par la seconde unité réceptrice (14) sur la seconde voie de communication (22).

2. Unité maître selon la revendication 1, **caractérisée en ce que** le signal d'information, transmis en mode lecture par l'unité de commande d'émission (18) à la première unité émettrice (11) et à la seconde unité émettrice (12), présente un champ de données à la valeur 0,
l'unité de commande de réception (18) étant conçue en mode lecture pour commander en circuit OU les champs de données des deux signaux d'information reçus par la première unité réceptrice (13) sur la première voie de communication (21) et par la seconde unité réceptrice (14) sur la seconde voie de communication (22).

3. Système de communication avec une structure maître-esclave qui comporte une unité maître (1) selon l'une quelconque des revendications 1 ou 2 et une pluralité de participants en tant qu'unités esclaves (3) qui sont reliés entre eux par la première voie de communication (21) et la seconde voie de communication (22), la première voie de communication (21) et la seconde voie de communication (22) fonctionnant en sens contraires l'une par rapport à l'autre.

4. Système de communication selon la revendication 3, **caractérisé en ce que** chaque participant (3) comporte une première unité réceptrice (31) reliée à la première voie de communication (21) pour recevoir des signaux d'information sur la première voie de communication (21), une première unité émettrice (32) reliée à la première voie de communication pour émettre des signaux d'information sur la première voie de communication (21), une seconde unité réceptrice (33) reliée à la seconde voie de communication (22) pour recevoir des signaux d'information sur la seconde voie de communication (22), et une seconde unité émettrice (34) reliée à la seconde voie de communication pour émettre des signaux d'information sur la seconde voie de communication (22), une unité de traitement (35) comportant une entrée et une sortie pour traiter des signaux d'information et un dispositif de couplage (37) activable, le dispositif de couplage (37) pouvant activable étant conçu, en fonctionnement normal, pour relier l'entrée de l'unité de traitement (35) à la première unité réceptrice (31), la sortie de l'unité de traitement à la première unité émettrice (32) et la seconde unité réceptrice (33) à la seconde unité émettrice (34), et, en mode défaut de la première unité émettrice (32) et/ou de la seconde unité réceptrice (33), pour relier l'entrée de l'unité de traitement (35) à la première unité réceptrice (31) et la sortie de l'unité de traitement (35) à la seconde unité émettrice (34), et en mode défaut de la première unité réceptrice (31) et/ou de la seconde unité émettrice (34), pour relier l'entrée de l'unité de traitement (35) à la seconde unité réceptrice (33) et la sortie de l'unité de traitement (35) à la première unité émettrice (32).

5. Système de communication selon la revendication 4,
**caractérisé en ce que** le dispositif de couplage (37) activable de chaque participant (3) comporte un premier multiplexeur (38) dont la première entrée est reliée à la première unité réceptrice (31), dont la seconde entrée est reliée à la seconde unité réceptrice (33) et dont la sortie est reliée à l'entrée de l'unité de traitement (35), ainsi qu'un second multiplexeur (39) dont la première entrée est reliée à la seconde unité réceptrice (35), dont la seconde entrée est reliée à la sortie de l'unité de traitement (35) et dont la sortie est reliée à la seconde unité émettrice (34), le premier multiplexeur (38) étant conçu, en fonctionnement normal, pour coupler sa première entrée sur sa sortie et en mode défaut de la première unité réceptrice (31) et/ou de la seconde unité émettrice (34), pour coupler sa seconde entrée sur sa sortie, et le second multiplexeur (39) étant conçu, en mode normal, pour coupler sa première entrée sur sa sortie et en mode défaut de la première unité émettrice (32) et/ou de la seconde unité réceptrice (33), sa seconde entrée sur sa sortie.

6. Système de communication selon l'une quelconque des revendications 4 ou 5, **caractérisé en ce que** dans chaque participant (3), la première unité émettrice (32) et la seconde unité émettrice (34) et/ou la première unité réceptrice (31) et la seconde unité réceptrice (33) sont conçues pour constater un défaut de parcours dans la voie de communication (21, 22) raccordée et pour déclencher un mode défaut correspondant.

7. Système de communication selon l'une quelconque des revendications 4 à 6, **caractérisé en ce que** l'unité de commande d'émission (16) de l'unité maître (1) est conçue pour transférer à la première unité émettrice (11) et à la seconde unité émettrice (12) le signal d'information avec une zone de compteur placée sur une valeur prédéfinie pour l'émission en sens contraires et séparée sur la première voie de communication (21) et la seconde voie de communication (22), l'unité de traitement (35) de chaque participant étant conçue pour modifier d'une valeur prédéfinie la valeur de la zone de compteur, lors du passage du signal d'information, et l'unité de commande de réception (18) de l'unité maître (1) étant conçue pour interpréter la valeur des zones de compteur des deux signaux d'information reçus par la première unité réceptrice (13) sur la première voie de communication (31) et par la seconde unité réceptrice (14) sur la seconde voie de communication (22).

8. Système de communication selon la revendication 7, **caractérisé en ce que** l'unité de commande de réception (18) de l'unité maître (1) est conçue pour additionner la valeur des zones de compteur des signaux d'information reçus par la première unité réceptrice (13) sur la première voie de communication (21) et par la seconde unité réceptrice (14) sur la seconde voie de communication (22).

9. Procédé d'exploitation d'un système de communication avec une structure maître-esclave qui comporte une unité maître (1) et une pluralité de participants (3) en tant qu'unités esclaves, les unités esclaves (3) étant reliées en série à l'unité maître (1) par une structure à double anneau (2) fonctionnant en sens contraires, formée de la première voie de communication (21) et de la seconde voie de communication (22), l'unité maître (1) comportant une première unité émettrice (11) reliée à la première voie de communication pour émettre des signaux d'information sur la première voie de communication (21), une seconde unité émettrice (12) reliée à la seconde voie de communication pour émettre des signaux d'information sur la seconde voie de communication (22), une première unité réceptrice (13) reliée à la première voie de communication pour recevoir des signaux d'information sur la première voie de communication (21), une seconde unité réceptrice (14) reliée à la seconde voie de communication (22) pour recevoir des signaux d'information sur la seconde voie de communication (22), une unité de commande d'émission (16) reliée à la première unité émettrice (11) et à la seconde unité émettrice (12), et une unité de commande de réception (18) reliée à la première unité réceptrice (13) et à la seconde unité réceptrice (14), **caractérisé en ce qu'**en mode lecture, l'unité de commande d'émission (16) de l'unité maître (1) transmet à la première unité émettrice (11) et à la seconde unité émettrice (12), un signal d'information avec un champ de données qui comporte pour chaque participant (3) raccordé une zone de données associée, pour l'émission en sens contraires et séparée sur la première voie de communication (21) et la seconde voie de communication (22), et une unité de traitement (35) de chaque participant inscrit ce signal d'information dans la zone de données associée lors du traitement du signal d'information de passage, et l'unité de commande de réception (18) de l'unité maître (1) superpose les zones de données des deux signaux d'information reçus par la première unité réceptrice (13) sur la première voie de communication (21) et par la seconde unité réceptrice (14) sur la seconde voie de communication (22).

10. Procédé selon la revendication 9, **caractérisé en ce qu'**en mode lecture, le signal d'information transmis par l'unité de commande d'émission (18) de l'unité maître (1) à la première unité émettrice (11) et à la seconde unité émettrice (12), présente un champ de données de valeur 0, l'unité de commande de réception (18) de l'unité maître (1), en mode lecture, commandant en circuit OU les champs de données des deux signaux d'information reçus par la première unité réceptrice (13) sur la première voie de communication (21) et par la seconde unité réceptrice (14) sur la seconde voie de communication (22).

11. Procédé selon l'une quelconque des revendications 9 ou 10, **caractérisé en ce que** l'unité de commande d'émission (16) de l'unité maître (1) transmet à la première unité émettrice (11) et à la seconde unité émettrice (12) le signal d'information avec une zone de compteur placée sur une valeur prédéfinie pour l'émission en sens contraires et séparée sur la première voie de communication (21) et la seconde voie de communication (22), l'unité de traitement (35) de chaque participant modifiant la valeur de la zone de compteur d'une valeur prédéfinie lors du passage du signal d'information, et l'unité de commande de réception (18) interprétant chaque fois la valeur des zones de compteur des deux signaux d'information reçus par la première unité réceptrice (13) sur la première voie de communication (21) et par la seconde unité réceptrice (14) sur la seconde voie de communication (22).

12. Procédé selon la revendication 11, **caractérisé en ce que** l'unité de commande de réception (18) de l'unité maître (1) additionne la valeur des zones de compteur des signaux d'information reçus par la première unité réceptrice (13) sur la première voie de communication (21) et par la seconde unité réceptrice (14) sur la seconde voie de communication (22).

13. Procédé selon l'une quelconque des revendications 9 à 12, **caractérisé en ce que** chaque participant (3) comporte une première unité réceptrice (31) reliée à la première voie de communication pour recevoir des signaux d'information sur la première voie de communication (21), une première unité émettrice (32) reliée à la première voie de communication pour émettre des signaux d'information sur la première voie de communication (21), une seconde unité réceptrice (33) reliée à la seconde voie de communication pour recevoir des signaux d'information sur la seconde voie de communication (22) et une seconde unité émettrice (34) reliée à la seconde voie de communication pour émettre des signaux d'information sur la seconde voie de communication (22) ainsi qu'un dispositif de couplage (37) activable, le dispositif de couplage (37) activable, en mode normal, reliant une entrée de l'unité de traitement (35) à la première unité réceptrice (21), une sortie de l'unité de traitement (35) à la première unité émettrice (38) et la seconde unité réceptrice (33) à la seconde unité émettrice (34), et en mode défaut de la première unité émettrice (32) et/ou de la seconde unité réceptrice (33), reliant l'entrée de l'unité de traitement (35) à la première unité réceptrice (31) et la sortie de l'unité de traitement (35) à la seconde unité émettrice (34), et, en mode défaut de la première unité réceptrice (31) et/ou de la seconde unité émettrice (34), reliant l'entrée de l'unité de traitement (35) à la seconde unité de réception (33) et la sortie de l'unité de traitement à la première unité émettrice (32).

14. Procédé selon la revendication 13, **caractérisé en ce que** le dispositif de couplage (37) activable comporte un premier multiplexeur (38) dont la première entrée est reliée à la première unité réceptrice (31), dont la seconde entrée est reliée à la seconde unité réceptrice (33) et dont la sortie est reliée à l'entrée de l'unité de traitement (35), ainsi qu'un second multiplexeur (39) dont la première entrée est reliée à la seconde unité réceptrice (33), dont la seconde entrée est reliée à la sortie de l'unité de traitement (35) et dont la sortie est reliée à la seconde unité émettrice (34), le premier multiplexeur (38) en mode normal couplant sa première entrée sur sa sortie et, en mode défaut de la première unité réceptrice (31) et/ou de la seconde unité émettrice (34), sa seconde entrée sur sa sortie, et le second multiplexeur (39), en mode normal, couplant sa première entrée sur sa sortie et en mode défaut de la première unité émettrice (31) et/ou de la seconde unité réceptrice (34), sa seconde entrée sur sa sortie.

15. Procédé selon l'une quelconque des revendications 13 ou 14, **caractérisé en ce que** la première unité émettrice (32) et la seconde unité émettrice (34) et/ou la première unité réceptrice (31) et la seconde unité réceptrice (33) sont conçues pour constater un défaut de parcours dans la voie de communication (21, 22) raccordée et pour déclencher un mode défaut correspondant.

16. Procédé selon l'une quelconque des revendications 9 à 15 qui sert à la commande et à la régulation d'une pluralité de servomoteurs.
